(19) Europäisches Patentamt
European Patent Office
Office européen des brevets

(11) **EP 3 662 724 B1**

(12) **EUROPÄISCHE PATENTSCHRIFT**

(45) Veröffentlichungstag und Bekanntmachung des Hinweises auf die Patenterteilung:
**06.09.2023 Patentblatt 2023/36**

(21) Anmeldenummer: **18768869.2**

(22) Anmeldetag: **11.09.2018**

(51) Internationale Patentklassifikation (IPC):
*H02M 3/335* (2006.01)    *H05B 45/3725* (2020.01)
*H05B 45/385* (2020.01)    *H05B 45/375* (2020.01)

(52) Gemeinsame Patentklassifikation (CPC):
**H02M 3/33576; H05B 45/3725; H05B 45/385;**
H05B 45/375

(86) Internationale Anmeldenummer:
**PCT/EP2018/074367**

(87) Internationale Veröffentlichungsnummer:
**WO 2019/052974 (21.03.2019 Gazette 2019/12)**

(54) **BETRIEBSGERÄT FÜR EINE ELEKTRISCHE LAST UND VERFAHREN**

CONTROL GEAR FOR AN ELECTRICAL LOAD AND METHOD

APPAREIL DE COMMANDE POUR UNE CHARGE ÉLECTRIQUE ET PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.09.2017 DE 102017216183**
**29.03.2018 DE 102018204891**

(43) Veröffentlichungstag der Anmeldung:
**10.06.2020 Patentblatt 2020/24**

(73) Patentinhaber: Tridonic GmbH & Co. KG
**6851 Dornbirn (AT)**

(72) Erfinder: **DE CLERCQ, Ludwig Erasmus**
**6850 Dornbirn (AT)**

(74) Vertreter: **Rupp, Christian**
**Mitscherlich PartmbB**
**Patent- und Rechtsanwälte**
**Karlstraße 7**
**80333 München (DE)**

(56) Entgegenhaltungen:
**DE-A1-102015 114 036     DE-A1-102016 222 161**
**US-A1- 2016 128 160**

**Beschreibung**

TECHNISCHES GEBIET

Verschiedene Beispiele der Erfindung betreffen Betriebsgeräte für eine elektrische Last wie z.B. eine Leuchtdiode. Verschiedene Beispiele der Erfindung betreffen insbesondere das Betreiben von einem oder mehreren Schaltern eines DC-DC-Schaltwandlers des Betriebsgeräts.

HINTERGRUND

Zur Helligkeitssteuerung von Leuchtmitteln kann es vorgesehen sein, den zeitgemittelten bzw. mittleren Stromfluss zu einem Leuchtmittel, beispielsweise eine Leuchtdiode sowie eine entsprechende Spannung, zu steuern. Dazu können Schaltwandler verwendet werden. Beispiele für Schaltwandler umfassen Abwärtswandler (engl. buck converter) und Sperrwandler (engl. flyback converter). Bei solchen Schaltwandlern ist ein Schalter vorgesehen, der das Laden und Entladen eines Energiespeichers, z.B. einer Spule, steuert. Beispielsweise ist es aus DE 10 2015 203 249 A1 bekannt, mittels des Schaltwandlers und einer Steuerung einen Regelkreis zu implementieren, der eine Dimmer-Funktionalität implementiert. Dabei kann der mittlere Stromfluss zum Leuchtmittel in Abhängigkeit von einer Führungsgröße geregelt werden, welche wiederum basierend auf einem Dimmer-Level bestimmt ist. Eine ähnliche Anordnung ist aus DE 10 2015 114036 A1 bekannt.

In verschiedenen Anwendungen kann es erstrebenswert sein, die Helligkeit der Leuchtmittel besonders genau zu steuern, d.h. die Helligkeit in guter Übereinstimmung mit dem Dimmer-Level einzustellen. Auch sollte typischerweise Flackern des Leuchtmittels aufgrund von niedrigen Schaltfrequenzen des Schaltwandlers vermieden werden. Andererseits können hohe Schaltfrequenzen des Schaltwandlers vergleichsweise hohe Verluste bewirken, sodass die Energieeffizienz leidet.

KURZE ZUSAMMENFASSUNG DER ERFINDUNG

Es besteht ein Bedarf für verbesserte Techniken zum Regeln des Stromflusses Diese Aufgabe wird von den Merkmalen der unabhängigen Patentansprüche gelöst. Die Merkmale der abhängigen Patentansprüche definieren Ausführungsformen.

KURZE BESCHREIBUNG DER FIGUREN

FIG. 1 illustriert schematisch ein Betriebsgerät mit einer Steuerung und einem Schaltwandler gemäß verschiedener Beispiele.

FIG. 2 illustriert schematisch einen Sperrwandler eines Betriebsgeräts gemäß verschiedener Beispiele.

FIG. 3 illustriert schematisch einen Abwärtswandler eines Betriebsgeräts gemäß verschiedener Beispiele.

FIG. 4 illustriert schematisch eine Regelschleife, die durch einen Schaltwandler und eine Steuerung eines Betriebsgeräts in verschiedenen Beispielen implementiert werden kann.

FIG. 5 illustriert schematisch den Zeitverlauf des Betriebs von Schaltern eines Sperrwandlers gemäß verschiedener Beispiele.

FIG. 6 illustriert schematisch den Zeitverlauf des Betriebs von Schaltern eines Sperrwandlers gemäß verschiedener Beispiele.

FIG. 7 illustriert schematisch den Zeitverlauf des Betriebs von Schaltern eines Sperrwandlers gemäß verschiedener Beispiele.

FIG. 8 illustriert Aspekte in Bezug auf die Variation einer Stellgröße in Abhängigkeit von einer Führungsgröße der Regelschleife gemäß verschiedener Beispiele.

FIG. 9 ist ein Flussdiagramm eines beispielhaften Verfahrens.

FIG. 10 illustriert schematisch den Zeitverlauf des Betriebs von Schaltern eines Sperrwandlers gemäß verschiedener Beispiele.

FIG. 11 illustriert Aspekte in Bezug auf die Variation von Stellgrößen in Abhängigkeit von einer Führungsgröße der Regelschleife gemäß verschiedener Beispiele.

FIG. 12 ist ein Flussdiagramm eines beispielhaften Verfahrens.

FIG. 13 illustriert schematisch einen Sperrwandler eines Betriebsgeräts gemäß verschiedener Beispiele.

DETAILLIERTE BESCHREIBUNG VON AUSFÜHRUNGSFORMEN

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Nachfolgend wird die vorliegende Erfindung anhand bevorzugter Ausführungsformen unter Bezugnahme auf die Zeichnungen näher erläutert. In den Figuren bezeichnen gleiche Bezugszeichen gleiche oder ähnliche Elemente. Die Figuren sind schematische Repräsentationen verschiedener Ausführungsformen der Erfindung. In den Figuren dargestellte Elemente sind nicht notwendigerweise maßstabsgetreu dargestellt. Vielmehr sind die verschiedenen in den Figuren dargestellten Elemente derart wiedergegeben, dass ihre Funktion und genereller Zweck dem Fachmann verständlich wird. In den Figuren dargestellte Verbindungen und Kopplungen zwischen funktionellen Einheiten und Elementen können auch als indirekte Verbindung oder Kopplung implementiert werden. Eine Verbindung oder Kopplung kann drahtgebunden oder drahtlos implementiert sein. Funktionale Einheiten können als Hardware, Software oder eine Kombination aus Hardware und Software implementiert werden.

Nachfolgend werden Techniken beschrieben, um mittels eines Betriebsgeräts eine elektrische Last zu betreiben. Die hierin beschriebenen Techniken können in Betriebsgeräten für Leuchtmittel Anwendung finden; in solchen Fällen bildet das Leuchtmittel - beispielsweise eine Leuchtdiode - die Last. Während nachfolgend vornehmlich auf eine solche Anwendung in Betriebsgeräten für Leuchtmittel Bezug genommen wird, können die hierin beschriebenen Techniken jedoch auch im Betrieb für andere Arten von Lasten angewendet werden.

In den hierin beschriebenen Beispielen werden DC-DC-Schaltwandler (nachfolgend kurz Schaltwandler) verwendet, um die Leuchtdiode zu betreiben. Solche Schaltwandler weisen einen oder mehrere Schalter - z.B. durch Halbleiter-Transistoren implementiert - auf, sowie einen Energiespeicher. Beispiele für Schaltwandler umfassen Wandler mit und ohne Potentialtrennung. Beispiele umfassen Abwärtswandler, Sperrwandler, Aufwärts-Abwärtswandler und Aufwärtswandler.

Typischerweise wird der mindestens eine Schalter des Schaltwandlers zyklisch zwischen einem leitenden und einem nicht-leitenden Zustand hin- und her geschaltet. Durch einen Tastgrad des zyklischen Hin- und Herschaltens können die Spannung und der Stromfluss zur Last gesteuert werden. Im Allgemeinen kann der Zyklus, mit dem der mindestens eine schaltete Schaltwandlers geschaltet wird, mehrere Phasen aufweisen, die iterativ und zyklisch durchlaufen werden; dabei können sich unterschiedliche Phasen dadurch unterscheiden, dass der mindestens eine Schalter je nach Phase in unterschiedlichen Zuständen betrieben wird. Beispielsweise könnte ein erster Schalter in einer ersten Phase in einem leitenden Zustand betrieben werden, während ein zweiter Schalter in der ersten Phase in einem nichtleitenden Zustand betrieben wird; dann könnte der erste Schalter in einer zweiten Phase in dem nichtleitenden Zustand betrieben werden, während der zweite Schalter in der zweiten Phase in dem leitenden Zustand betrieben wird.

Dabei kann der Betrieb des mindestens einen Schalters gesteuert werden, beispielsweise basierend auf einer Stellgröße einer Regelschleife. Dies bedeutet, dass der mindestens eine Schalter gezielt zwischen einem leitenden Zustand (oder AN-Zustand oder geschlossener Zustand) und einem nicht-leitenden Zustand (oder AUSZustand oder geöffneter Zustand) hin- und her geschaltet werden kann. Dadurch kann insbesondere der mittlere Stromfluss zur Leuchtdiode gesteuert werden. Eine oder mehrere für den mittleren Stromfluss zur Leuchtdiode indikative Regelgrößen und Stellgrößen der Regelschleife können in diesem Zusammenhang berücksichtigt werden.

In manchen Beispielen ist es möglich, den mittleren Stromfluss zur Leuchtdiode besonders genau zu überwachen. Dies kann durch Erfassen eines Messsignals, das indikativ für den Stromfluss zur Leuchtdiode ist, geschehen, wobei das Messsignal durch eine Messschaltung erfasst wird, die angrenzend an einen lastseitigen Ausgangsanschluss des Schaltwandlers angeordnet ist. Das bedeutet insbesondere, dass die Messschaltung zwischen dem Ausgangsanschluss und dem mindestens einen Schalter des Schaltwandlers angeordnet ist. Beispielsweise kann bei einem Sperrwandler die Messschaltung auf der sekundären Seite eines Transformators der Messschaltung angeordnet sein. Dadurch kann der Einfluss der Stellgröße auf den mittleren Stromfluss zur Leuchtdiode besonders genau überwacht werden. In anderen Beispielen könnte die den Stromfluss zur Last messende Messschaltung aber auch weiter entfernt zum Ausgangsanschluss angeordnet sein, beispielsweise auf der primären Seite des Transformators im Fall eines Sperrwandlers.

Die hierin beschriebenen Techniken ermöglichen es, den mittleren Stromfluss zur Last besonders genau zu steuern und z.B. insbesondere genau zu regeln. Insbesondere kann durch den Schaltwandler und eine Steuerung des Betriebsgeräts eine Regelschleife implementiert werden, die mindestens eine für den mittleren Stromfluss zur Last indikative Größe als Regelgröße berücksichtigt. Dies bedeutet, dass der mittlere Stromfluss zur Last durch die Regelschleife genau und überwacht eingestellt werden kann, z.B. in Bezug zu einer Führungsgröße. Zeitliche Drifts - z.B. aufgrund von Temperatur-Schwankungen oder Alterung der Leuchtdiode - können im Rahmen von Störgrößen berücksichtigt werden.

Die Helligkeit von Leuchtdioden ist abhängig vom mittleren Stromfluss, mit welchem die Leuchtdioden betrieben werden. Indem der mittlere Stromfluss zur Last mittels der Regelschleife gesteuert wird, ermöglichen es die hierin beschriebenen Techniken, die Helligkeit von Leuchtdioden genau und überwacht einzustellen. Damit kann beispielsweise Dimmer-Funktionalität implementiert werden.

Verschiedenen Beispielen liegt die Erkenntnis zugrunde, dass durch geeignete Steuerung des Betriebs des mindestens einen Schalters der Stromfluss zur Last besonders genau eingestellt werden kann. Gleichzeitig kann es mittels verschiedenen hierin beschriebenen Beispielen möglich sein, besonders tiefe Schaltfrequenzen - die typischerweise Flackern der Leuchtdiode bewirken - zu vermeiden. Andererseits kann es mittels verschiedener hierin beschriebener Beispiele möglich sein, besonders hohe Schaltfrequenzen - die typischerweise eine große Verlustleistung aufgrund der häufigen Schaltvorgänge bewirken - zu vermeiden. Verschiedene hierin beschriebene Beispiele ermöglichen es, eine

Erfindungsgemäß wird dazu ein Sperrwandler verwendet, der einen Transformator, einen ersten Schalter, sowie einen zweiten Schalter aufweist. Dabei ist der erste Schalter auf einer primären Seite des Transformators angeordnet, das heißt zum Beispiel zugewendet zu einer Netzversorgung oder einem DC-Bussystem. Der zweite Schalter ist auf der sekundären Seite des Transformators angeordnet, das heißt näher bei der zu versorgenden Leuchtdiode, als der erste Schalter. Eine Steuerung ist dabei eingerichtet, um zumindest den zweiten Schalter des Sperrwandlers basierend auf Stellgröße einer Regelschleife zu schalten. Die Stellgröße der Regelschleife umfasst dabei erfindungsgemäß eine Zeitdauer, für welche der zweite Schalter im leitenden Zustand - manchmal auch als niederohmiger Zustand oder An-Zustand bezeichnet - betrieben wird. Dies kann also bedeuten, dass eine Regelung - beispielsweise auf einen gewünschten mittleren Stromfluss zur Leuchtdiode - durch gezieltes Steuern des zweiten Schalters im Zeitraum erzielt wird.

Insbesondere im Vergleich zu Referenzimplementierungen - bei denen der zweite Schalter in Abhängigkeit von einer Stellgröße, die einen Stromfluss durch den Sperrwandler zur Last definiert, gesteuert wird - kann derart eine erhöhte Genauigkeit der durch die Regelschleife implementierten Regelung erzielt werden. Insbesondere kann durch die Steuerung im Zeitraum Quantisierungsrauschen von Komparatoren, die im Zusammenhang mit solchen Referenzimplementierungen typischerweise eingesetzt werden, vermieden werden.

In einem weiteren Beispiel wird ein Schaltwandler mit einem ersten Schalter und einem zweiten Schalter, sowie mit einem Energiespeicher durch eine Steuerung geeignet gesteuert. Insbesondere kann die Steuerung eingerichtet sein, um den DC-DC-Schaltwandler gemäß einer ersten Phase, einer zweiten Phase und einer dritten Phase anzusteuern. In der ersten Phase wird der erste Schalter in einem leitenden Zustand betrieben und der zweite Schalter in einem nicht-leitenden Zustand betrieben. In der zweiten Phase wird dann der erste Schalter im nicht-leitenden Zustand betrieben, während der zweite Schalter im leitenden Zustand betrieben wird. In der dritten Phase werden schließlich sowohl der erste Schalter, als auch der zweite Schalter im nichtleitenden Zustand betrieben.

Beispielsweise können die erste Phase, die zweite Phase und die dritte Phase gemäß einem Zyklus iterativ und zyklisch durchlaufen werden. Dann kann in der ersten Phase der Energiespeicher des DC-DC-Schaltwandlers durch einen Netzanschluss oder im Allgemeinen durch eine Versorgungsleitung geladen werden, während der Energiespeicher in der anschließenden zweiten Phase entladen wird. Die dritte Phase kann zur Feinjustierung des mittleren Stromflusses zur Leuchtdiode dienen.

Durch das Vorsehen der dritten Phase kann insbesondere erreicht werden, dass auch vergleichsweise kleine mittlere Stromflüsse durch den DC-DC-Schaltwandler zur Leuchtdiode implementiert werden können: dies liegt daran, dass während der dritten Phase typischerweise keine besonders großen Stromflüsse fließen. Deshalb sinkt auch der zeitliche Mittelwert des Stromflusses über eine Iteration des Zyklus, der dem mittleren Stromfluss zur Leuchtdiode entspricht.

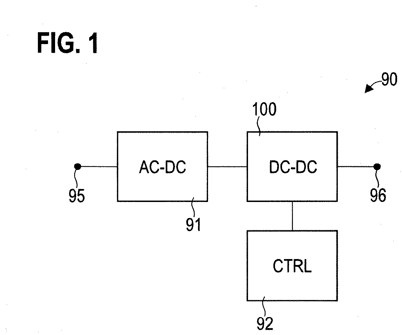

FIG. 1 illustriert Aspekte in Bezug auf ein Betriebsgerät 90, welches von hierin beschriebenen Techniken profitieren kann. Das Betriebsgerät 90 umfasst einen Netzanschluss 95. Das Betriebsgerät 90 ist eingerichtet, um eine Netzspannung über den Netzanschluss 95 zu empfangen. Die Netzspannung kann eine AC-Spannung mit einer Amplitude im Bereich von 100 V bis 300 V sein.

Das Betriebsgerät 90 umfasst auch einen AC-DC-Wandler 91. Der AC-DC-Wandler 91 ist eingerichtet, um die Netzspannung in ein DC-Signal wandeln. Beispielsweise könnte der AC-DC-Wandler einen Brückengleichrichter, ein oder mehrere Glättungsfilter, etc. aufweisen.

Während in FIG. 1 das Betriebsgerät eine AC-Spannung empfängt, könnte das Betriebsgerät in anderen Implementierungen auch eine DC-Spannung empfangen, z.B. von einem DC Bus-System (engl. DC string).

Das Betriebsgerät 90 umfasst auch einen Schaltwandler 100, der eingerichtet ist, um über einen Eingangsanschluss 101 das DC-Signal vom AC-DC-Wandler 91 zu empfangen. Das DC-Signal weist eine bestimmte Spannungsamplitude auf. Der Schaltwandler 100 ist eingerichtet, um ein weiteres DC-Signal über einen Ausgangsanschluss 96 an eine Leuchtdiode (in FIG. 1 nicht dargestellt) auszugeben, wobei das weitere DC-Signal eine Spannungsamplitude aufweist, die verschieden ist von der Spannungsamplitude des DC-Signals am Eingang 101 des Schaltwandlers 100. Der Schaltwandler beeinflusst auch den Stromfluss zur Leuchtdiode.

Außerdem umfasst das Betriebsgerät 90 auch eine Steuerung 92. Die Steuerung 92 könnte beispielsweise durch einen Mikrocontroller oder ein programmierbares Schalter-Array (engl. field-programmable array, FPGA) implementiert werden. Die Steuerung 92 kann als Hardware und/oder Software implementiert werden.

Die Steuerung 92 implementiert Dimmer-Funktionalität. Dies bedeutet, dass die Steuerung 92 basierend auf einem Dimmer-Signal 93 den Betrieb des Schaltwandlers 100 geregelt steuert. Das Dimmer-Signal 93 kann einen Helligkeits-Wunsch eines Benutzers indizieren.

Die Steuerung könnte z.B. einen Zeitgeber umfassen. Der Zeitgeber kann ein Zeitgebersignal bereitstellen, basierend auf welchem im Zusammenhang mit der Dimmer-Funktionalität ein oder mehrere Schalter des Schaltwandlers 100 geschaltet werden. Der Zeitgeber wiederum kann das Zeitgebersignal basierend auf einem Taktsignal (engl. clock signal) einer Taktquelle bereitstellen. Z.B. könnte ein Schwingquarz etc. verwendet werden.

Insbesondere implementiert die Steuerung 92 zusammen mit dem Schaltwandler 100 in manchen Beispielen eine Regelschleife. Dabei wird mindestens ein Schalter des Schaltwandlers 100 als Stellgröße der Regelschleife geschaltet, d.h. wahlweise im leitenden oder nicht-leitenden Zustand betrieben. Dadurch kann insbesondere der mittlere Stromfluss zur Last 96 geregelt werden, wo durch die Helligkeit eines die Last implementierenden Leuchtmittel geregelt werden kann. Die Führungsgröße kann basierend auf dem Dimmer-Signal 93 bestimmt werden.

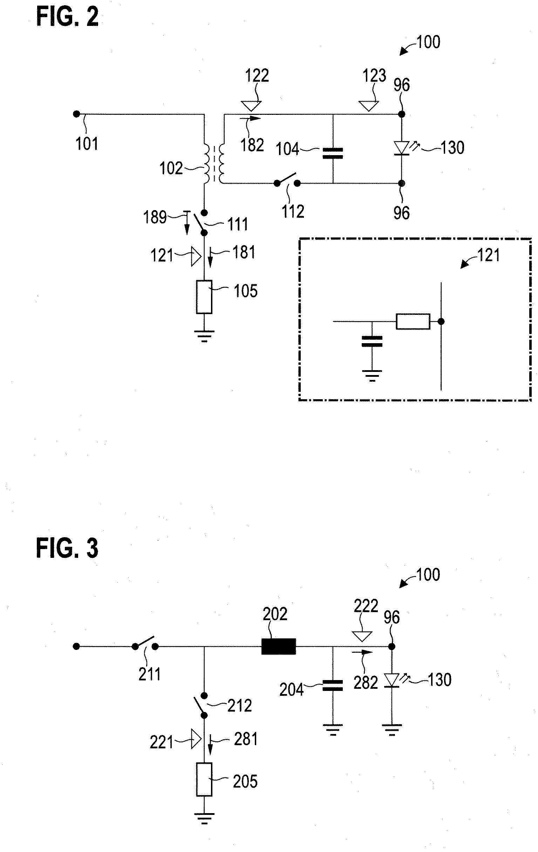

FIG. 2 illustriert Aspekte in Bezug auf den Schaltwandler 100. FIG. 2 illustriert eine beispielhafte Implementierung des Schaltwandlers 100. In dem Beispiel der FIG. 2 ist der Schaltwandler 100 als Sperrwandler mit Potentialtrennung implementiert.

Der Sperrwandler 100 umfasst ein Paar Spulen 102, die einen Transformator implementieren. Dies bedeutet, dass die Spulen 102 induktiv gekoppelt sind. Die Spulen 102 wirken als Energiespeicher.

Der Sperrwandler 100 umfasst auch einen Schalter 111, der auf der Primärseite der Spulen 102 hin zu Masse angeordnet ist, sowie einen Widerstand 105. Ferner umfasst der Sperrwandler 100 einen Schalter 112, der auf der Sekundärseite der Spulen 102 angeordnet ist. Der Sperrwandler 100 umfasst auch einen Kondensator 104, der Glättungsfunktionalität bereitstellt. In manchen Beispielen könnte anstatt des Schalters 112 auch eine Diode verwendet werden.

Im Beispiel der FIG. 2 ist auch eine Leuchtdiode 130 dargestellt, die mit dem Ausgangsanschluss 96 des Sperrwandlers 100 verbunden ist, und welche die Last implementiert.

In FIG. 2 ist ferner dargestellt, wie der Stromfluss 181 auf der Primärseite der Spulen 102 durch eine Messschaltung 121 gemessen werden kann. Außerdem ist in FIG. 2 dargestellt, wie der Stromfluss 182 auf der Sekundärseite der Spulen 102 durch eine weitere Messschaltung 122 und/oder eine Messschaltung 123 gemessen werden kann. Die Messschaltungen 121, 122, 123 könnten beispielsweise jeweils einen Shunt-Widerstand umfassen. Die Messschaltungen können eingerichtet sein, um ein Messsignal auszugeben, das indikativ für den jeweiligen Stromfluss ist. Es wäre möglich, eine induktive Kopplung zu verwenden.

Nachfolgend wird die Funktionsweise des Sperrwandlers 100 beschrieben. Erste Phase (i): Zunächst wird der Schalter 111 im leitenden Zustand betrieben. Dann steigt der Stromfluss durch die Primärspule 102 und Energie wird in den Spulen 102 gespeichert. Dies bedeutet, dass der Schalter 111 den Ladevorgang des durch die Spulen 102 bzw. den Transformator implementierten Energiespeichers steuert. Gleichzeitig ist der Schalter 112 nicht-leitend geschaltet: deshalb fließt kein Stromfluss durch die Sekundärspule 102. Der Stromfluss zur Last 130 wird vom Glättungskondensator 104 gespeist. Zweite Phase (ii): Dann wird der Schalter 111 nicht-leitend geschaltet und der Schalter 112 wird leitend geschaltet. Diese Phase wird oftmals als Sperr-Phase bezeichnet. Die zuvor in den Spulen 102 gespeicherte Energie speist den Stromfluss zur Last 130 und lädt außerdem den Kondensator 104. Die Phasen (i) und (ii) werden zyklisch wiederholt, indem die Schalter 111, 121 geeignet zwischen dem leitenden und dem nicht-leitenden Zustand hin- und her geschaltet werden.

Es ist in manchen Beispielen möglich, dass eine weitere, dritte Phase (iii) vorhanden ist. Dabei wird sowohl der Schalter 111, als auch der Schalter 112 im nicht-leitenden Zustand betrieben. Dann können die Phasen (i), (iii) und (iii) zyklisch und iterativ durchlaufen werden, z.B. (i) dann (ii) dann (iii) und dann wieder (i) etc..

Aus der voranstehenden Beschreibung ist ersichtlich, dass durch gezieltes Schalten der Schalter 111, 112 der Stromfluss zur Last 130 gesteuert werden kann. Dabei sind grundsätzlich unterschiedliche Betriebsmodi in Bezug auf das Schalten der Schalter 111, 112 bekannt. Beispielsweise können die Schalter 111, 112 im sogenannten kontinuierlichen Modus (engl. continuous mode) betrieben werden. Dabei wird der Schalter 111 in den leitenden Zustand geschaltet, bevor der Stromfluss 182 auf null - oder darüber hinaus auf negative Werte - abgesunken ist. Das bedeutet, dass keine negativen Werte des Stromflusses 182 beobachten werden. Es wäre auch möglich, die Schalter 111, 112 im sogenannten lückenden Modus (engl. discontinuous mode) zu betreiben. Dabei wird der Schalter 111 erst dann wieder in den leitenden Zustand geschaltet, wenn der Stromfluss 182 bereits für eine bestimmte Zeit auf null abgesunken ist. Der sogenannte Grenzbetrieb-Modus (engl. borderline oder boundary mode) stellt den Übergang von dem kontinuierlichen Modus zum diskontinuierlichen Modus dar; d.h., der Schalter 111 wird gerade dann in den leitenden Zustand geschaltet, wenn der Stromfluss 182 auf null abgesunken ist.

Ein weiterer Modus, der in den verschiedenen Beispielen als Hybrid-Modus bezeichnet. Der Hybrid-Modus kann eine Mischung des lückenden Modus und des kontinuierlichen Modus bezeichnen. Hier nimmt in der Phase (II) der Stromfluss 182 negative Werte bis hin zu einem negativen Minimalwert an, entsprechend dem kontinuierlichen Modus; dann wird in der Phase (III) sowohl der Schalter 111, als auch der Schalter 112 im nicht-leitenden Zustand betrieben, entsprechend dem lückenden Modus. Dadurch können sehr kleine mittlere Stromfluss zur Leuchtdiode 130 eingestellt werden. Gleichzeitig kann aufgrund des Vorsehen des negativen Minimalwerts für den Stromfluss 182 während der Phase (II) die Länge der Phase (III) vergleichsweise kurz dimensioniert werden, insbesondere im Vergleich zum klassischen lückenden Modus.

Im Inset der FIG. 2 (gestrichelt-gepunktete Linie) ist eine beispielhafte Implementierung der Strommessschaltungen 121-123 dargestellt. Ein Shunt-Widerstand und ein Kondensator sind vorgesehen. Durch Dimensionierung des Kondensators kann eine Tiefpassfilterung erfolgen. In manchen Beispielen -z.B. wenn ein Maximalwert des Stromflusses 181 oder des Stromflusses 182 erkannt werden soll - kann eine Tiefpassfilterung nicht erstrebenswert sein. Deshalb können im Allgemeinen die Strommessschaltungen 121-123 mehrere Zweige aufweisen, die jeweils unterschiedliche Filterparameter aufweisen.

FIG. 3 illustriert Aspekte in Bezug auf den Schaltwandler 100 (nicht im Schutzumfang der Ansprüche enthalten). FIG. 3 illustriert eine beispielhafte Implementierung des Schaltwandlers 100. In dem Beispiel der FIG. 3 ist der Schaltwandler 100 als Abwärtswandler implementiert.

Der Abwärtswandler 100 umfasst eine Spule 202. Die Spule 202 wirkt als Energiespeicher.

Der Abwärtswandler 100 umfasst auch einen Schalter 211, der angrenzend an den Eingangsanschluss 101 angeordnet ist (manchmal auch als high-side Schalter bezeichnet). Der Abwärtswandler 100 umfasst ferner einen weiteren Schalter 212 (manchmal auch als low-side Schalter bezeichnet) der hin zu Masse angeordnet ist, sowie einen Masse-seitigen Widerstand 205. Anstatt des Schalters 212 wird manchmal auch eine Diode verwendet. Ein Glättungskondensator 204 ist vorgesehen. In FIG. 3 ist auch dargestellt, wie der Stromfluss 281 durch eine Messschaltung 221 gemessen werden kann; sowie wie der Stromfluss 282 durch eine Messschaltung 222 gemessen werden kann.

Im Grundsatz entspricht der Betrieb des Abwärtswandlers 100 gemäß dem Beispiel der FIG. 3 dem Betrieb des Sperrwandlers 100 gemäß dem Beispiel der FIG. 2. Wenn der Schalter 211 leitend geschaltet ist, wird der Energiespeicher 202 geladen. Wenn der Schalter 211 nicht-leitend geschaltet ist, wird der Energiespeicher 202 entladen. Insbesondere ist es auch möglich, den Abwärtswandler 100 im kontinuierlichen Modus, im lückenden Modus, im Grenzbetrieb-Modus oder im Hybrid-Modus zu betreiben.

Nachfolgend wird aus Gründen der Einfachheit primär auf eine Implementierung des Schaltwandlers als Sperrwandler Bezug genommen; die entsprechenden Techniken könnten aber auch unmittelbar auf andere Typen von Schaltwandlern übertragen werden, z.B. auch den Abwärtswandler 100 gemäß dem Beispiel der FIG. 3.

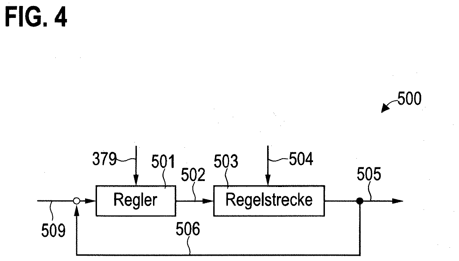

FIG. 4 illustriert Aspekte in Bezug auf eine Regelschleife 500, die in verschiedenen hierin beschriebenen Beispielen dazu verwendet werden kann, um dem Betrieb eine Schaltwandlers 100 zu steuern. Die Regelschleife 500 kann in Hardware und/oder Software implementiert sein. Die Regelschleife 500 kann z.B. durch die Steuerung 92 und den Schaltwandler 100 implementiert sein.

Die Regelschleife 500 steuert mittels einer Stellgröße 502 den Betrieb des Schaltwandlers 100. Eine Regelstrecke 503 der Regelschleife 500 wird also durch den Schaltwandler 100 und insbesondere ein oder mehrere Schalter 111, 112, 211, 212 implementiert. Die Stellgröße 502 kann zum Beispiel durch geeignete Dimensionierung eines Steuersignal implementiert werden, welches an die Schalter 111, 112, 211, 212 ausgegeben wird und welches Betrieb der Schalter 111, 112, 211, 212 im leitenden oder nicht-leitenden Zustand bestimmt. Ein entsprechender Gate-Treiber könnte für Schalter 111, 112, 211, 212, die als Feldeffekttransistoren implementiert sind, vorgesehen sein.

Die Regelstrecke 503 wird auch durch ein oder mehrere Sensoren zur Überwachung des Betriebs implementiert. Beispielsweise könnte die Regelstrecke auch die Messschaltungen 121, 122, 221, 222 umfassen. Dann könnte beispielsweise ein Signal der Messschaltung 121 bzw. 221 mit einem Signal der Messschaltung 122 bzw. 222 kombiniert werden, um ein für eine Regelgröße 505 indikatives Messsignal 506 zu bestimmen.

Die Regelgröße 505 wird also durch die Steuerung des Betriebs der Schaltwandlers 100 basierend auf der Stellgröße 502 beeinflusst. Die Regelgröße 505 kann mit dem mittleren Stromfluss durch den Schaltwandler 100 zur Leuchtdiode 130 korrelieren.

Dies bedeutet, dass eine Veränderung der Regelgröße 505 auch eine Veränderung des mittleren Stromflusses durch den Schaltwandler 100 zur Leuchtdiode 130 bewirkt - und damit in einer Veränderung der Helligkeit resultiert.

Dabei können in den unterschiedlichen hierin beschriebenen Beispielen unterschiedliche Regelgröße 505 implementiert werden. Beispielsweise könnte eine Regelgröße 505 in Bezug auf einen maximalen Stromfluss durch den Schaltwandler und/oder in Bezug auf einen minimalen Stromfluss durch den Schaltwandler erfolgen. Dies bedeutet, dass eine Regelung in Bezug auf bestimmte Eigenschaften des Stromflusses durch den Schaltwandler 100 erfolgt.

Die Regelgröße 505 - bzw. das für die Regelgröße indikatives Messsignal 506 - wird verglichen mit einer Führungsgröße 509 und, basierend auf dem Vergleich, die angepasste Stellgröße 502 bereitgestellt. Dies wird durch den Regler 501 erreicht. Der Regler 501 könnte beispielsweise eine Abweichung zwischen der Führungsgröße 509 und der Regelgröße 505 bestimmen und durch geeignete Variation der Stellgröße 502 diese Abweichung minimieren.

Beispielsweise wäre es möglich, dass die Führungsgröße 509 in Abhängigkeit von dem mittleren Stromfluss zur Last 130 verändert wird; beispielsweise könnte der mittlere Stromfluss zur Last 130 in Abhängigkeit von einem gewünschten Dimmer-Level verändert werden.

Im Zusammenhang mit FIG. 4 ist auch dargestellt, dass ein oder mehrere zeitveränderliche Störgrößen 504 auf die Regelstrecke 503 einwirken können. Veränderungen im Verhalten der Regelstrecke 503 aufgrund der ein oder mehreren Störgrößen 504 können durch die Regelschleife 500 kompensiert werden.

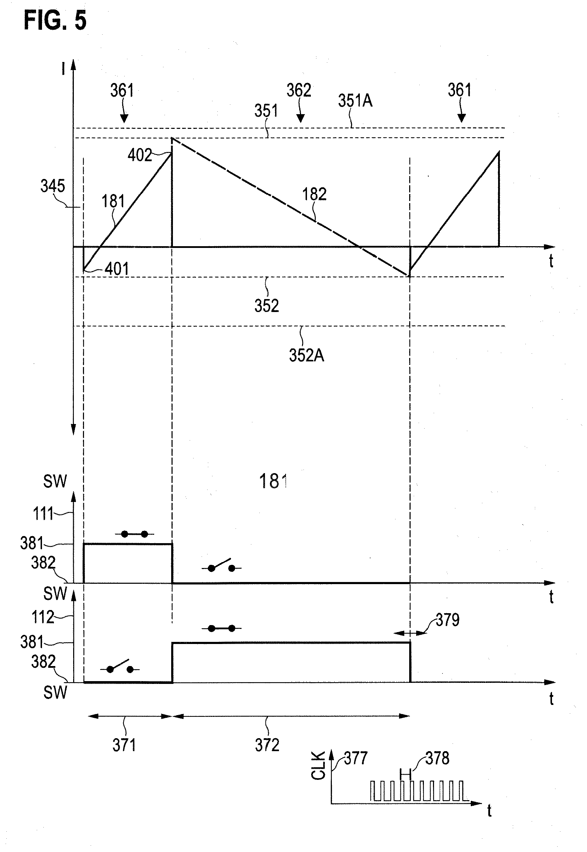

FIG. 5 illustriert Aspekte in Bezug auf den Betrieb des Schaltwandlers 100 gemäß verschiedener Beispiele. Insbesondere illustriert FIG. 5 Aspekte in Bezug auf den Betrieb eines Sperrwandlers 100 (vergleiche FIG. 2). Entsprechende Techniken, wie sie nachfolgend im Zusammenhang mit FIG. 5 diskutiert werden, könnten aber auch für andere Typen von Schaltwandlern 100 verwendet werden.

FIG. 5 illustriert insbesondere Aspekte in Bezug auf den Stromfluss 181 (durchgezogene Linie in FIG. 5, oben) und ferner in Bezug auf den Stromfluss 182 (gestrichelte Linie in FIG. 5, oben). Aus FIG. 5 ist ersichtlich, dass in der Phase (I) 361 der Stromfluss 181 durch den Schalter 111 auf der primären Seite des durch die Spulen 102 implementierten Transformators von einem negativen Wert zu einem positiven Wert ansteigt. In der anschließenden Phase (II) 362 nimmt der Stromfluss 182 durch den Schalter 112 auf der sekundären Seite des durch die Spulen 102 implementierten Transformators von einem positiven Wert - der dem positiven Maximalwert 351 des Stromflusses im Schaltwandler 100 entspricht - zu einem negativen Wert - der dem negativen Minimalwert 352 des Stromflusses im Schaltwandler 100 entspricht - ab. Das Verhältnis des Stromflusses 181 zum Stromfluss 182 ist insbesondere durch das Wicklungsverhältnis der Spulen 102 bestimmt. Durch die Verwendung des Schalters 112 - anstatt einer Diode - werden die negativen Stromflüsse 181, 182 ermöglicht.

In FIG. 5 ist auch ein Minimalwert 401 des Stromflusses 181 dargestellt, sowie ein Maximalwert 402 des Stromflusses 181.

FIG. 5 illustriert ferner Aspekte in Bezug auf den Betrieb der Schalter 111, 112 des Schaltwandlers 100. In FIG. 5, unten ist dargestellt, wie in der Phase (I) 361 und der Phase (II) 362 die Ansteuerung der Schalter 111, 112 geschieht. Beispielsweise könnten die in FIG. 5, unten dargestellten Signalformen Steuersignalen entsprechen, die von der Steuerung 92 an die Steueranschlüsse der Schalter 111, 112 bereitgestellt werden.

Aus FIG. 5 ist ersichtlich, dass die Steuerung 92 eingerichtet ist, um in der Phase (I) 361 den Schalter 111 im leitenden Zustand 381 zu betreiben und den Schalter 112 im nicht-leitenden Zustand 382 zu betreiben. Die Steuerung 92 ist auch eingerichtet, um in der Phase (II) 362 den Schalter 111 im nicht-leitenden Zustand 382 zu betreiben und um den Schalter 112 im leitenden Zustand 381 zu betreiben.

In FIG. 5 ist auch der Zeit gemittelte Stromfluss 345 durch den Schaltwandler 100 dargestellt. Durch Variation des Zeitverlaufs der Stromflüsse 181, 182 kann auch der gemittelte Stromfluss 345 - und damit die Helligkeit der Leuchtdiode 130 - variiert werden. Dies kann durch Implementierung der Regelschleife 500 unter Wahl einer geeigneten Stellgröße 505 erfolgen. Beispielsweise wird in verschiedenen Referenzimplementierungen als Stellgröße 505 der maximale Stromfluss 351 sowie der minimale Stromfluss 352 verwendet (nicht im Schutzumfang der Ansprüche enthalten). Dies kann jedoch den Nachteil aufweisen, dass aufgrund von Quantisierungsrauschen von entsprechenden Komparatoren, die ein Messsignal der Messschaltung 122 und/oder ein Messsignal der Messschaltung 121 mit einem entsprechenden Schwellenwert, der der Stellgröße 502 entspricht, vergleichen, vergleichsweise ungenau sein.

Ausgehend von dieser Erkenntnis ist erfindungsgemäß vorgesehen, als Stellgröße 502 die Zeitdauer 372 zu verwenden, für welche der Schalter 112 im leitenden Zustand 381 betrieben wird - d.h. also zum Beispiel die Länge der Phase (II) 362. Typischerweise kann eine solche Regelung im Zeitraum vergleichsweise genau implementiert werden. Wird beispielsweise durch die Anpassung der Stellgröße 502 die Zeitdauer 372 verringert - bei sonst unveränderten Parametern -, so nimmt typischerweise der mittlere Stromfluss 345 zu.

FIG. 5 illustriert auch Techniken im Zusammenhang mit einer weiteren Steigerung der Genauigkeit der Regelung. Ein Zeitgebersignal (engl. timer signal) wird typischerweise bereitgestellt, welches die Steuerung dazu verwendet, um den Betrieb des Schalters 112 im leitenden Zustand 381 gezielt für die Zeitdauer 372 zu gewährleisten. Beispielsweise könnte das Zeitgebersignal nach Ablauf der Zeitdauer 372 einen anderen Wert annehmen, als vor Ablauf der Zeitdauer 372. Im Allgemeinen ist also das Zeitgebersignal indikativ für die Zeitdauer 372 und ein Schalter-Treiber ist eingerichtet, um den Schalter 112 zwischen dem leitenden Zustand 381 und dem nicht-leitenden Zustand 382 basierend auf dem Zeitgebersignal zu schalten.

Typischerweise ist der das Zeitgebersignal bereitstellende Zeitgeber eingerichtet, um das Zeitgebersignal basierend auf einem Taktsignal 377 mit einer bestimmten Taktperiode 378 bereitzustellen. Zum Beispiel könnte das Zeitgebersignal koinzident mit einer Flanke des Taktsignals 377 den Ablauf der Zeitdauer 372 indizieren. Das Zeitgebersignal könnte als ganzzahliges Vielfaches der Taktperiode 378 definiert sein. Dies bedeutet also, dass eine Genauigkeit, mit der die Zeitdauer 372 als Stellgröße 502 variiert werden kann, begrenzt sein kann, durch die Taktperiode 378 des Taktsignals 379. Typische Taktperioden 378 liegen im Bereich von Mikrosekunden bis Millisekunden. Dadurch kann eine gewisse Ungenauigkeit bei der Regelung resultieren. Typischerweise ist jedoch die aus der Taktperiode 378 resultierende Ungenauigkeit im Zusammenhang mit einer im Zeitraum definierten Stellgröße 502 der Regelschleife 500 vergleichsweise klein, zum Beispiel insbesondere im Vergleich mit einer aus Quantisierungsrauschen resultierenden Ungenauigkeit im Zusammenhang mit einer in Bezug auf die Stromflüsse 181, 182 definierten Stellgröße 502 gemäß Referenzimplementierungen.

Um auch diese verbleibende Ungenauigkeit weiter zu reduzieren, können Dither-Techniken eingesetzt werden. Beispielsweise wäre es möglich, dass eine Dither-Quelle eingerichtet ist, um ein Dither-Signal bereitzustellen. Das Dither-Signal kann eine Modulation 379 der Zeitdauer 372 bewirken. Diese Modulation 379 könnte zum Beispiel zufällig oder pseudo-zufällig erfolgen. Ein lineares Schieberegister kann verwendet werden, um das Dither-Signal bereitzustellen. Das Frequenzspektrum der Modulation 379 könnte eine vorgegebene Form aufweisen, zum Beispiel dreiecksförmig, etc. Das Frequenzspektrum der Modulation 379 könnte um null zentriert sein. Die Modulation 379 könnte zum Beispiel im Bereich von 20 % bis 200 % der Taktperiode 378 liegen, optional im Bereich von 80 % bis 120 %. Derart kann - über mehrere Zyklen der Phasen 361, 362 gemittelt - eine Genauigkeit für die Regelung erzielt werden, die höher ist, als ohne Dither-Signal; das heißt die Limitierung durch die endliche Taktperiode 378 kann behoben oder gelindert werden.

Voranstehend wurden verschiedene Techniken beschrieben, bei denen die Zeitdauer 372, für welche der Schalter 112 auf der sekundären Seite des Transformators, der durch die Spulen 102 implementiert ist, im leitenden Zustand 381 betrieben wird, basierend auf einer Stellgröße 502 der Regelschleife 500 variiert wird. In manchen Beispielen wäre es auch möglich, dass die Stellgröße 502 auch die Zeitdauer 371 umfasst. Es wäre aber auch möglich, dass die Zeitdauer 371, für welche der Schalter 111 während der Phase (I) 361 im leitenden Zustand 381 betrieben wird, nicht im Rahmen der Regelschleife 500 verändert wird. Dies kann insbesondere bedeuten, dass die Stellgröße 502 zwar die Zeitdauer 372 umfasst, jedoch nicht die Zeitdauer 371.

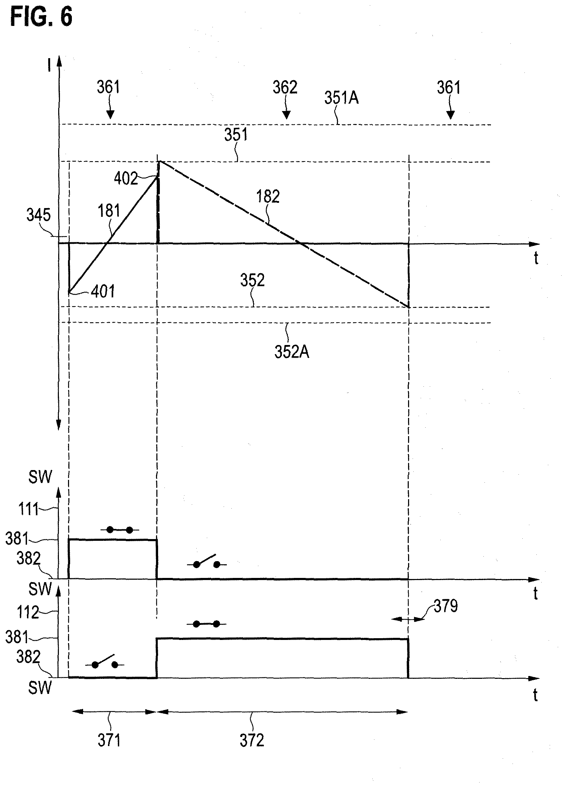

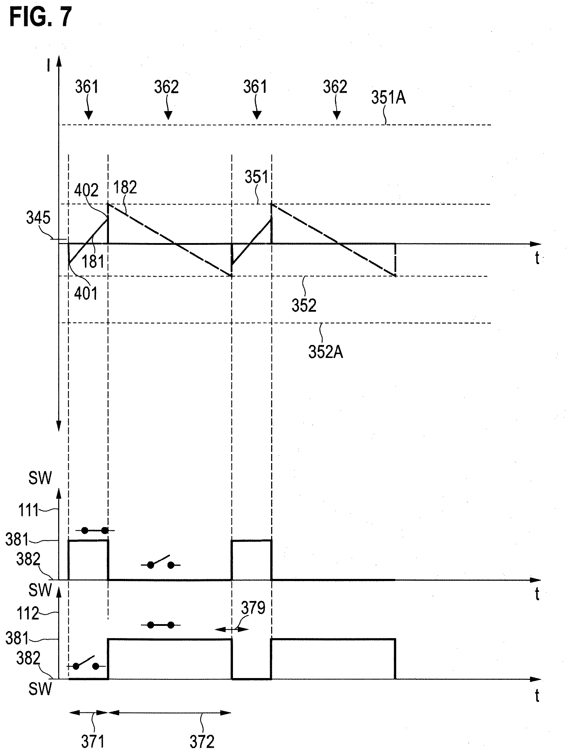

Dies kann eine parametrisierte Anpassung der Zeitdauer 371, beispielsweise in Abhängigkeit von der Führungsgröße 509 oder im Allgemeinen vom Dimmer-Level der Leuchtdiode 130, ermöglichen. Dadurch kann wiederum eine balancierte Steuerung sowohl der Schaltfrequenz des Schaltwandlers - d.h. der Periodendauer eines Zyklus der Phasen (I) 361 und (II) 362 - auf der einen Seite, sowie der extremalen Stromflüsse 351, 352 auf der anderen Seite erfolgen. Dadurch kann eine Optimierung des Betriebs des Schaltwandlers 100 in Bezug auf Flackern einerseits und Verluste andererseits erfolgen. Dies ist auch im Zusammenhang mit den FIGs. 6 und 7 dargestellt.

FIG. 6 illustriert Aspekte in Bezug auf den Betrieb des Schaltwandlers 100. Dabei entspricht das Beispiel der FIG. 6 grundsätzlich dem Beispiel der FIG. 5. In dem Beispiel der FIG. 6 ist jedoch der gewünschte mittlere Stromfluss 345 - beispielsweise aufgrund eines herabgesetzten Dimmer-levels, das einer geringeren Helligkeit der Leuchtdiode 130 entspricht - im Vergleich zum Beispiel der FIG. 5 herabgesetzt. Dies wird durch eine entsprechend angepasste Führungsgröße 509 der Regelschleife berücksichtigt. Die angepasste Führungsgröße 509 bewirkt wiederum, dass - bei gleicher Zeitdauer 371 - die Zeitdauer 372 als Stellgröße 502 der Regelschleife 500 angepasst wird, und zwar insbesondere im Vergleich zu dem Beispiel der FIG. 5 verlängert wird. Dies bedeutet, dass die Summe der Zeitdauern 371, 372 zunimmt und damit die Schaltfrequenz, mit der der Schaltwandler 100 betrieben wird, abnimmt.

Es kann in solchen und anderen Szenarien vorkommen, dass bei einem bestimmten Dimmer-Level bzw. einer bestimmten Dimensionierung der Führungsgröße 509 die Schaltfrequenz, mit welcher der Schaltwandler 100 betrieben wird, zu stark absinkt. Dies kann ein Flackern der Leuchtdiode 130 bewirken, welches vermieden werden sollte. Um ein zu starkes Absinken der Schaltfrequenz zu vermeiden, ist es möglich, die Zeitdauer 371 als Parameter - d.h. außerhalb der Regelschleife 500 - zu verändern. Dies ist im Zusammenhang mit der FIG. 7 dargestellt.

FIG. 7 illustriert Aspekte in Bezug auf den Betrieb des Schaltwandlers 100. Dabei entspricht das Beispiel der FIG. 7 grundsätzlich den Beispielen der FIGs. 5 und 6. In dem Beispiel der FIG. 7 ist der gewünschte mittlere Stromfluss 345 so dimensioniert, wie im Beispiel der FIG. 6, d.h. insbesondere kleiner als im Beispiel der FIG. 5. Die Zeitdauer 371 wird dabei aber in Abhängigkeit von dem vorgegebenen mittleren Stromfluss 345 bestimmt. Dabei besteht eine Tendenz, die Zeitdauer 371 für kleinere mittlere Stromfluss 345 zur Leuchtdiode 130 kleiner zu dimensionieren. Dadurch können verschiedene Effekte erzielt werden.

Durch die parametrisierte Veränderung der Zeitdauer 371 kann erreicht werden, dass ein Absinken der Schaltfrequenz für kleinere mittlere Stromflüsse 345 zur Leuchtdiode 130 reduziert oder ganz vermieden wird. Dadurch kann Flackern vermieden werden.

Durch die parametrisierte Veränderung der Zeitdauer 371 kann ferner für kleinere mittlere Stromflüsse 345 zur Leuchtdiode 130 erreicht werden, dass kleinere Extremwerte 351, 352 für den Stromfluss 181, 182 im Schaltwandler 100 erreicht werden. Dadurch können Verluste reduziert werden.

Durch die parametrisierte Veränderung der Zeitdauer 371 kann auch ein Anstieg der Schaltfrequenz vermieden oder jedenfalls reduziert werden. Typischerweise nimmt bei besonders großen Schaltfrequenzen die Verlustleistung aufgrund der häufigen Schaltvorgänge für die Schalter 111, 112 zu.

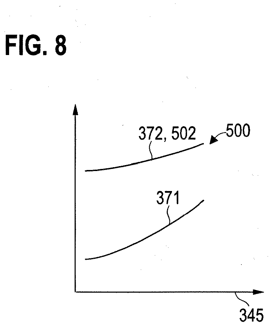

Die Veränderung der Zeitdauer 371 in Abhängigkeit vom vorgegebenen mittleren Stromfluss 345 kann mittels der Führungsgröße 509 in Bezug auf die Regelung berücksichtigt werden. Insbesondere kann die Führungsgröße 509 in Abhängigkeit von der Zeitdauer 371 bestimmt sein, beispielsweise zusätzlich zu einer Abhängigkeit von dem vorgegebenen mittleren Stromfluss 345. Dies ist im Zusammenhang mit FIG. 8 beschrieben.

FIG. 8 illustriert Aspekte in Bezug auf die Abhängigkeit der Zeitdauer 371 vom mittleren Stromfluss 345. Aus FIG. 8 ist ersichtlich, dass eine Tendenz für kleinere Dimensionierung der Zeitdauer 371 für kleinere mittlere Stromfluss 345 besteht.

FIG. 8 illustriert auch Aspekte in Bezug auf die Regelung der Zeitdauer 372 mittels der Regelschleife 500, durch geeignete Wahl einer entsprechenden Stellgröße 502. Aus FIG. 8 ist ersichtlich, dass für kleinere mittlere Stromfluss 345 - insbesondere aufgrund der kleineren Dimensionierung der Zeitdauer 371 - auch eine Tendenz für kleinere Zeitdauern 372 bestehen kann.

Die in FIG. 8 dargestellten Abhängigkeiten sind rein illustrativ und können im Allgemeinen von den Gegebenheiten der Regelstrecke 503 abhängen. Beispielsweise könnte eine Nachschlagetabelle vorgesehen sein, welche die zu wählende Führungsgröße 509 - welche die Steuergröße 502 umfassend die Zeitdauer 372 betrifft-für unterschiedliche Dimmer-Level bzw. mittlere Stromfluss 345, wie auch für unterschiedliche Zeitdauern 371 spezifiziert. In manchen Beispielen könnte aber auch eine eins-zu-eins Zuordnung zwischen Dimmer-Level, Zeitdauern 371 und Führungsgröße 509, die in Bezug auf die Zeitdauer 372 als Stellgröße 502 definiert ist, vorliegen.

Dabei kann insbesondere die Änderungsrate der Führungsgröße 509 - und damit zumindest in einigen Beispielen auch die Änderungsrate, mit der die Zeitdauer 371 angepasst wird - basierend auf einer Zeitkonstante der Regelschleife 500 bestimmt sein, insbesondere begrenzt sein. Beispielsweise kann dadurch vermieden werden, dass die Zeitdauer 371 außerhalb der Regelschleife 500 zu zügig verändert wird: in einem solchen Fall würde die Anpassung der Zeitdauer 372 als Stellgröße 502 der Regelschleife 500 nur zeitverzögert erfolgen, so dass eine ungewollte Veränderung der Helligkeit der Leuchtdiode 130 beobachtet werden würde.

Voranstehend wurden also Techniken beschrieben, um den primärseitigen Stromfluss 181 parametrisiert in Abhängigkeit von der Führungsgröße 509 anzupassen, nämlich durch Veränderung der Zeitdauer 371. Diese Techniken sind nicht im Schutzumfang der Ansprüche enthalten. Dagegen ist erfindungsgemäß vorgesehen, den Maximalwert 402 des Stromflusses 181 einzustellen und eine variable Zeitdauer 371 zu verwenden. Insbesondere ist erfindungsgemäß vorgesehen, den Maximalwert 402 des Stromflusses 181 in Abhängigkeit von der Zeitdauer 372 zu bestimmen. Dies bewirkt, dass - in Abhängigkeit von der Zeitdauer 372 - auch die Zeitdauer 371 variiert wird. Dazu kann der Stromfluss 181 überwacht werden und der Schalter 111 kann basierend auf dem Überwachen bei Erreichen des Maximalwerts 402 geschaltet werden.

Durch solche Techniken kann die Robustheit gegenüber Veränderungen der Netzspannung erhöht werden. Insbesondere kann eine Robustheit gegenüber zeitlichen Fluktuationen der Netzspannung (engl. ripple) erhöht werden. Oftmals treten solche Fluktuationen der Netzspannung mit Frequenzen im Bereich von 20 Hz - 100 Hz auf, d.h. vergleichsweise langsam im Vergleich zu typischen Schaltfrequenzen bzw. den Zeitdauern 371, 372. Die Fluktuationen der Netzspannung können durch andere Verbraucher bewirkt sein. Die Amplitude der Fluktuationen der Netzspannung kann absolut gesehen klein sein, z.B. 0,5 % - 2 % der mittleren Amplitude der Netzspannung.

Dieser Befund wird nachfolgend motiviert.

Der mittlere Stromfluss 345 zur Leuchtdiode ist gegeben durch:

$$\text{Gleichung (1)}$$

$$i_{led} = \frac{1}{2} i_s \frac{t_s}{t_s + t_p}$$

wo $i_s$ den Maximalwert 351 bezeichnet, $t_s$ die Zeitdauer 372 und $t_p$ die Zeitdauer 371. Dies bedeutet, dass der Stromfluss 345 sehr sensitiv gegenüber Variationen des Maximalwerts 351 des sekundärseitigen Stromflusses 182, $i_s$ ist - wobei der Maximalwert 351 des sekundärseitigen Stromflusses 182 direkt abhängig ist vom Maximalwert 402 des Stromflusses 181. Damit wirken sich Änderungen im Maximalwert 402 stark auf Änderungen des mittleren Stromflusses 345 aus.

Es werden Fluktuationen der Netzspannung $V_B$ angenommen:

$$\text{Gleichung (2)}$$

$$V_B \rightarrow V_B \pm \frac{r}{100} V_B$$

Typischerweise, r ≈1-5.

Der Maximalwert 402 ist für zwei unterschiedliche Zeitdauern 371:

Gleichung (3)

$$i_p\left(t_p\right) = \frac{V_B}{L_P} t_p$$

wobei $L_P$ die primärseitige Induktivität des Transformators 102 bezeichet.

Die Änderung der Zeitdauer 371 ergibt sich aus Gl. (1) mit Gl. (2) mit Gl. (3) zu:

Gleichung (4)

$$\Delta t = t_p \frac{|r|}{100 \pm |r|}$$

Daraus ergibt sich, dass solche Fluktuationen der Netzspannung eine Änderungen der Zeitdauer 371, $t_p$ bedingen, um denselben Maximalwert 351 des primärseitigen Stromflusses 371 zu erzielen. Aus Gl (1) ergibt sich außerdem, dass die Fluktuationen der Netzspannung über die Variation der Zeitdauer 371 einen - wenn auch begrenzten - Einfluss auf den mittleren Stromfluss 345 haben.

Deshalb ist erfindungsgemäß vorgesehen, als Stellgröße - wie bereits beschrieben - die Zeitdauer 372 zu verwenden; und den Maximalwert 402 des primärseitigen Stromflusses 371 zu fixieren. Es ist also möglich, den Schalter 111 dann zu schalten, wenn der primärseitige Stromfluss 181 den Maximalwert 402 erreicht. Dann variiert zwar die Zeitdauer 371 mit den Fluktuationen der Netzspannung; dies hat aber einen geringeren Einfluss auf den mittleren Stromfluss 345, als eine Variation des Maximalwerts 402 und damit des Maximalwerts 351, vgl. Gl. (1) und Gl. (4).

Der Maximalwert 402 kann - wie obenstehend im Zusammenhang mit der Zeitdauer 371 beschrieben - parametrisiert in Abhängigkeit von der Führungsgröße wie beispielsweise dem mittleren Stromfluss 345 zur Leuchtdiode bestimmt sein (nicht im Schutzumfang der Ansprüche enthalten). Erfindungsgemäß ist vorgesehen, dass der Maximalwert 402 des primärseitigen Stromflusses 371 in Abhängigkeit von der Zeitdauer 372 bestimmt ist. Dabei ist eine Tiefpassfilterung der Zeitdauer 372 vorgesehen, um eine solche langsame Änderung - z.B. durch Veränderung der Führungsgröße - zu berücksichtigen. Die schnelle Regelung auf einen bestimmten mittleren Stromfluss 345 wird dann nach wie vor durch Steuerung der Zeitdauer 372 erzielt. Dadurch kann eine robuste Regelung erzielt werden.

Um den Schalter 111 bei Erreichen des Maximalwerts 402 zu schalten, kann z.B. eine Komparatorschaltung vorgesehen sein, die das Messsignal der Messschaltung 121 mit dem vorgegebenen Maximalwert 402 (cf. FIG. 2) vergleicht und in Abhängigkeit von dem Vergleich den Schalter 111 schaltet. Dadurch kann ein schnelles Schalten ohne Digitalisierung erfolgen, durch Verarbeitung in der Analogdomäne.

In Bezug auf die Figs. 5 - 7 ist ferner dargestellt, dass auch Schwellenwerte 351A, 352A für die Stromflüsse 181, 182 vorgesehen sein können. Beispielsweise könnte mittels der Messschaltungen 121, 122 überprüft werden, ob einer oder mehrere der Stromflüsse 181, 182 einen entsprechenden Schwellenwert 351A, 352A überschreiten. Wenn eine solche Überschreitung eines oder mehrere der Schwellenwerte 351A, 352A festgestellt wird, könnte die Regelung des Schaltwandlers 100 durch Berücksichtigung der im Zeitraum definierten Stellgröße 502 übergangen werden. Derart kann sichergestellt werden, dass durch die Regelung im Zeitraum nicht Spitzenwerte für die Stromflüsse 181, 182 erreicht werden, welche eine Beschädigung der Schalter 111, 112 oder anderer Elektronik des Schaltwandlers 100 bewirken würden.

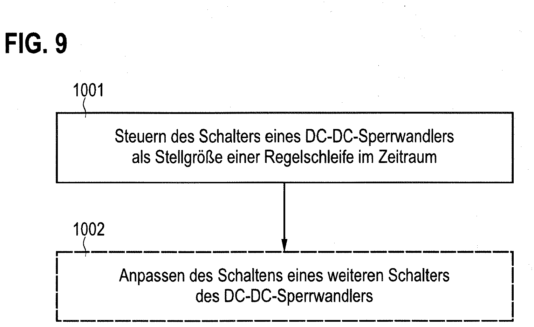

FIG. 9 ist ein Flussdiagramm eines beispielhaften Verfahrens. Beispielsweise könnte das Verfahren nach FIG. 9 von der Steuerung 92 ausgeführt werden.

In Block 1001 erfolgt das Steuern eines Schalters eines Sperrwandlers, beispielsweise eines Sperrwandlers mit Potenzialtrennung, basierend auf einer Stellgröße einer Regelschleife. Dabei ist die Stellgröße im Zeitraum definiert. Zum Beispiel könnte der auf der sekundären Seite des Sperrwandlers mit Potenzialtrennung angeordnete Schalter durch die Stellgröße geschaltet werden.

Optional wäre es möglich, dass das Verfahren in Block 1002 das Anpassen des Schaltens eines weiteren Schalters des Sperrwandlers in Abhängigkeit von einer die Führungsgröße definierenden Größe umfasst. Beispielsweise könnte in Block 1002 die Zeitdauer, für welche der weitere Schalter in einem leitenden Zustand betrieben wird, in Abhängigkeit von einem Dimmer-Level - welches auch die Führungsgröße definiert - parametrisiert bestimmt sein.

Insbesondere kann also eine Anpassung des Schaltens des weiteren Schalters außerhalb der Regelschleife erfolgen; die Regelschleife kann dann auf die Anpassung des Schaltens des weiteren Schalters reagieren. Beispielsweise könnte in Block 1002 das Schalten eines auf der primären Seite des Sperrwandlers mit Potenzialtrennung angeordneten weiteren Schalters angepasst werden.

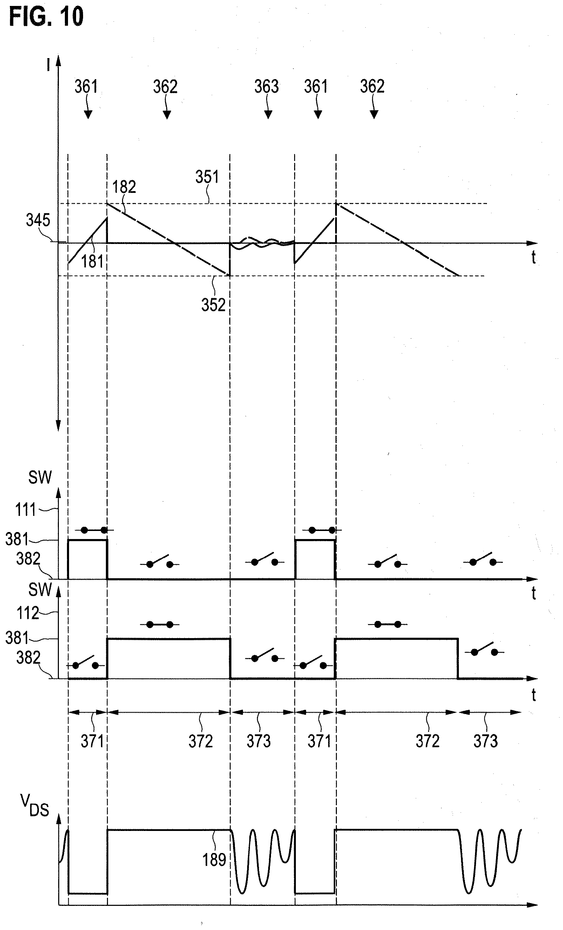

FIG. 10 illustriert Aspekte in Bezug auf den Betrieb eines Schaltwandlers 100 gemäß verschiedener Beispiele (nicht im Schutzumfang der Ansprüche enthalten). Insbesondere illustriert FIG. 10 Aspekte in Bezug auf den Betrieb eines Sperrwandlers. In dem Beispiel der FIG. 10 wird der Betrieb eines Sperrwandlers dargestellt; entsprechende Techniken könnten aber auch für andere Typen von Schaltwandler implementiert werden, beispielsweise insbesondere für Abwärtswandler mit zwei Schaltern.

FIG. 10 illustriert Aspekte in Bezug auf den Betrieb der Schalter 111, 112 des Schaltwandlers 100. in FIG. 10 ist dargestellt, dass eine Phase (I) 361, in welcher der Schalter 111 im leitenden Zustand 381 betrieben wird und in welcher der Schalter 112 im nicht-leitenden Zustand 382 betrieben wird, implementiert wird. Ferner wird eine Phase (II) 362 implementiert, in welcher der Schalter 111 im nicht-leitenden Zustand 382 betrieben wird und in welcher der Schalter 112 im leitenden Zustand 381 betrieben wird. Im Gegensatz zu den Beispielen der FIGs. 5 - 7 wird zusätzlich eine Phase (III) 363 implementiert, in welcher sowohl der Schalter 111, als auch der Schalter 112 im nicht-leitenden Zustand 382 betrieben werden.

Aus FIG. 10 ist ersichtlich, dass die Stromflüsse 181, 182 während der Phase (III) 363 vergleichsweise kleine Werte annehmen. Dadurch ist es möglich, den mittleren Stromfluss 345 zur Leuchtdiode 130 besonders klein zu dimensionieren. Durch Verlängerung oder Verkürzung der Zeitdauer 373, während welcher sowohl der Schalter 111, als auch der Schalter 112 im nicht-leitenden Zustand 382 betrieben werden, d.h. durch Verlängerung oder Verkürzung der Länge der Phase (III) 363, kann der mittlere Stromfluss 345 zu Leuchtdiode 130 besonders genau eingestellt werden. Um den mittleren Stromfluss 345 also besonders fein einzustellen, wäre es möglich, dass die Stellgröße 502 der Regelschleife 500 die Zeitdauer 373 umfasst. Dies bedeutet, dass auch eine im Zeitraum definierte Stellgröße 502 im Zusammenhang mit der Phase (III) 363 verwendet werden kann.

In FIG. 10 ist ersichtlich, dass - beispielsweise im Gegensatz zum herkömmlichen lückenden Modus - in der Phase (II) 362 der Schalter 112 so lange im leitenden Zustand 381 betrieben wird, bis der Stromfluss 182 einen negativen Maximalwert 352 annimmt (was grundsätzlich dem kontinuierlichen Modus entspricht). Zusätzlich wird aber die Phase (III) 363 vorgesehen (was grundsätzlich dem lückenden Modus entspricht). Im herkömmlichen lückenden Modus sinkt der Stromfluss 182 lediglich auf Null ab, jedoch nimmt keine signifikante negativen Werte an. Deshalb kann der in FIG. 10 dargestellte Modus für den Betrieb des Sperrwandlers 100 auch als Hybrid-Modus bezeichnet werden, da dieser eine Mischung zwischen lückendem Modus und kontinuierlichem Modus darstellt.

Insbesondere ist es möglich, dass der Betrag des positiven Maximalwert 351 in etwa dieselbe Größenordnung aufweist, wie der Betrag des negativen Minimalwerts 352. Beispielsweise wäre es möglich, dass der Betrag des Maximalwerts 351 im Bereich von 20 % bis 500 % des Betrags des Minimalwerts 352 liegt. Dies bedeutet, dass eine grobe Einstellung des mittleren Stromflusses 345 bereits durch geeignete Wahl des Minimalwerts 352 erfolgen kann. Die feine Einstellung des mittleren Stromflusses 345 kann dann durch geeignete Dimensionierung der Länge der Phase (III) 363 bzw. der Zeitdauer 373 erfolgen.

Eine solche feine Einstellung des mittleren Stromflusses 345 durch das Vorsehen der Phase (III) 363 könnte beispielsweise wie folgt quantifiziert werden: der über alle Phasen (I), (II), und (III) 361 - 363 gemittelte Stromfluss 181, 182 zur Last 130 kann sich nur unwesentlich unterscheiden von dem lediglich über die Phasen (I) und (II) 361, 362 gemittelte Stromfluss 181, 182 zur Last. Dies bedeutet dass die Phase (III) 363 nur vergleichsweise wenig zur Einstellung des mittleren Stromflusses 181, 182 zur Last 130 beiträgt. Beispielsweise wäre es möglich, dass der über alle Phasen (I), (II), und (III) 361 - 363 gemittelte Stromfluss 181, 182 zur Last 130 im Bereich von 80 % bis 120 % des nur über die Phasen (I) und (II) 361, 362 gemittelte Stromfluss 181, 182 zur Last 130 liegt, optional im Bereich von 95 % bis 105 %. Eine solche feine Einstellung des mittleren Stromflusses 181, 182 zur Last 130 ist charakteristisch für den hier beschriebenen Hybrid-Modus und unterscheidet sich wesentlich von dem lückenden Modus, wo durch die entsprechende Phase (III) eine stärkere Anpassung des mittleren Stromflusses 181, 182 zur Last 130 erfolgt - wodurch die Schaltfrequenz besonders stark herabgesetzt wird. Dieses starke Herabsetzen der Schaltfrequenz kann durch das Verwenden von negativen Stromfluss 181, 182 während den Phasen (I) 361 und (II) 362 im vorliegenden Fall vermieden werden.

In FIG. 10 ist dargestellt, dass während der Phase (III) 363 Oszillationen der Spannung 189 über den Schalter 111 (in FIG. 10 ganz unten dargestellt und mit VDS, Drain-Source-Spannung, gekennzeichnet; vgl. auch FIG. 2) und damit einhergehend auch Oszillationen der Stromflüsse 181, 182 auftreten können. Es wäre möglich, dass die Spannung 189 durch eine geeignete Messschaltung erfasst wird. Der Stromfluss 181 durch den Schalter 111 wird durch die Messschaltung 121 gemessen. Es wäre möglich, dass der Stromfluss 181 und/oder die Spannung 189 beim Schalten des Schalters 111 vom nicht leitenden Zustand 382 in den leitenden Zustand 381 beim Übergang von der Phase (III) 363 zur Phase (I) 361 berücksichtigt wird. Dadurch kann z.B. bei kleinen Stromflüssen 181, 182 geschaltet werden (wie In FIG. 10) dargestellt. Es wäre aber auch möglich, bei kleinen Spannungen VDS zu schalten (in FIG. 10 nicht dargestellt). Insbesondere kann dadurch die Verlustleistung beim Schalten reduziert werden, indem zum Beispiel dann geschaltet wird, wenn ein besonders geringer Stromfluss 181 berücksichtigt wird oder eine besonders geringe Spannung 189 vorliegt. Solche Techniken werden manchmal als Valley-Schalten (von engl. "Tal") bezeichnet.

Obenstehend wurde erläutert, dass die Steuergröße 502 in Bezug auf die Phase (III) 363 die Zeitdauer 373 umfassen kann. Auch Zusammenhang mit der Phase (I) 361 und der Phase (II) 362 wäre es dabei möglich, eine im Zeitraum definierte Steuergröße 502 zu verwenden. Beispielsweise wäre es möglich, dass - wie oben stehend im Zusammenhang mit den FIGs. 5 - 9 diskutiert - die Steuergröße 502 der Regelschleife 500 die Zeitdauer 372 umfasst. Alternativ wäre es aber auch möglich, dass die Steuergröße 502 beispielsweise den maximalen Stromfluss 351 und/oder den negativen Stromfluss 352 umfasst. Dies würde bedeuten, dass in Bezug auf die Phase (I) 361 und (II) 362 eine Regelung über die Stromstärke erfolgt; während in Bezug auf die Phase (III) 363 eine Regelung im Zeitraum erfolgt. Dabei kann wiederum die Führungsgröße 509 der Regelschleife 500 in Abhängigkeit von dem mittleren Stromfluss 345 bestimmt sein, d.h. zum Beispiel in Abhängigkeit von dem Dimmer-Level.

Dies bedeutet in anderen Worten, dass eine Veränderung des gewünschten mittleren Stromflusses 345 zu Leuchtdiode 130 auf verschiedenste Arten und Weisen implementiert werden kann: beispielsweise könnte der Maximalwert 351 des Stromflusses 181, 182 im Schaltwandler 100 und/oder der Minimalwert 352 des Stromflusses 181, 182 im Schaltwandler 100 durch Anpassung der entsprechenden Führungsgröße 509 in der Phase (I) 361 bzw. der Phase (II) 362 verändert werden. Alternativ oder zusätzlich könnte auch die Zeitdauer 373 verändert werden, durch Anpassung der entsprechenden Führungsgröße 509 in der Phase (III) 363.

In diesem Zusammenhang ist es möglich, dass unterschiedlichste Techniken in Bezug auf eine Anpassung solcher Eigenschaften des Betriebs der Schaltwandlers 100 als Funktion eines veränderten Dimm-Levels bzw. eines veränderten gewünschten mittleren Stromflusses 345 verwendet werden. Insbesondere kann dadurch eine besonders gute Abwägung zwischen Flackern bei zu geringen Schaltfrequenzen einerseits und Verlustleistung bei zu großen Schaltfrequenzen andererseits getroffen werden. Beispielsweise wäre es möglich, dass eine Veränderung des mittleren Stromflusses 345 eine erste Veränderung der Führungsgröße 509 in Bezug auf die Zeitdauer 373 in der Phase (III) 363 bewirkt, sowie eine zweite Veränderung der Führungsgröße 509 in der Phase (I) 361 und in der Phase (II) 362 in Bezug auf den Maximalwert 351 und/oder den Minimalwert 352. Dies bedeutet im Allgemeinen, dass bei einer Veränderung des mittleren Stromflusses 345 sowohl die Länge der Phasen (I) 361 und (II) 362 angepasst werden können, wie auch die Länge der Phase (III) 363. ES könnte also ein eine in Bezug auf die Phase (I) 361 und/oder die Phase (II) 362 definierte Führungsgröße 509 angepasst werden; und/oder eine in Bezug auf die Phase (III) 363 definierte Führungsgröße angepasst werden. Die relative Anpassung dieser beiden Führungsgrößen kann in Abhängigkeit von der Schaltfrequenz und/oder Verlust beim Schalten erfolgen. Beispielsweise könnte dadurch eine Schaltfrequenz einem gewünschten Wert stabilisiert werden. Beispielsweise wäre es möglich, dass ein Verhältnis zwischen der oben genannten ersten Veränderung zur zweiten Veränderung vorgegeben ist. Zum Beispiel könnte das Verhältnis in Abhängigkeit von der Schaltfrequenz und/oder den Verlusten beim Schalten vorgegeben sein. Derart kann je nach Position im Parameterraum eine unterschiedlich starke Veränderung der Längen der unterschiedlichen Phasen 361 - 363 erfolgen, so dass die Schaltfrequenz hinsichtlich Flackern und Verlustleistung optimiert werden kann.

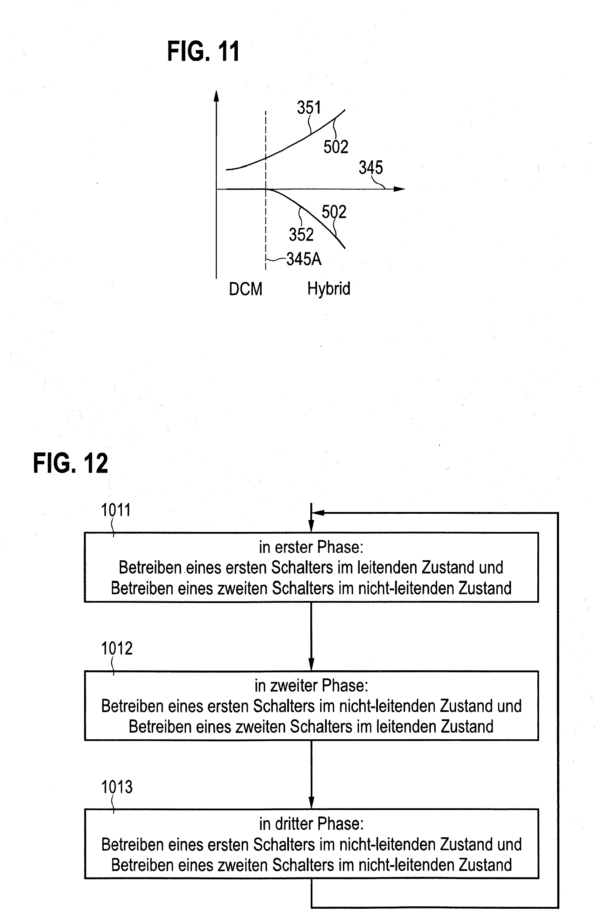

FIG. 11 illustriert Aspekte in Bezug auf den Betrieb des Schaltwandlers 100. Insbesondere illustriert FIG. 11 Aspekte in Bezug auf die Wahl der Stellgröße 502 in den Phasen (I) 361 und (II) 362, die den Maximalwert 351 und den Minimalwert 352 des Stromflusses 181, 182 durch den Schaltwandler 100 umfasst.

In FIG. 11 ist dargestellt, wie die Stellgröße 502 - und damit die Extremwerte 351, 352 als entsprechende Stellwerte - als Funktion des gewünschten mittleren Stromflusses 345 angepasst werden. Aus FIG. 11 ist ersichtlich, dass für kleiner mittlere Stromflüsse 345 auch kleinere Extremwerte 351, 352 durch geeignete Anpassung der Stellgröße 502 umgesetzt werden können. Dabei wird insbesondere für mittlere Stromflüsse 345, die einen bestimmten Schwellenwert 345A unterschreiten, der Minimalwert 352 auf null gesetzt. Dann entspricht der Betrieb des Schaltwandlers 100 dem lückenden Modus. Durch solche Techniken können besonders kleine mittlere Stromflüsse 345 erzielt werden und genau eingestellt werden.

FIG. 12 ist ein Flussdiagramm eines beispielhaften Verfahrens. Beispielsweise könnte das Verfahren gemäß dem Beispiel der FIG. 12 von der Steuerung 92 des Betriebsgeräts 90 ausgeführt werden.

Zunächst wird in Block 1011 eine erste Phase implementiert, beispielsweise die Phase (I) 361 wie sie im Zusammenhang mit den FIGs. voranstehend beschrieben wurde. Dabei wird ein erster Schalter eine Schaltwandlers im leitenden Zustand betrieben und ein zweiter Schalter des Schaltwandlers im nicht-leitenden Zustand betrieben. Der Schaltwandler könnte zum Beispiel ein Abwärtswandler sein oder aber auch ein Sperrwandler mit Potenzialtrennung.

Dann wird in Block 1012 eine zweite Phase implementiert, beispielsweise die Phase (II) 362 die sie im Zusammenhang mit den FIGs. voranstehend beschrieben wurde. Dabei wird der erste Schalter im nicht-leitenden Zustand betrieben und der zweite Schalter wird im leitenden Zustand betrieben.

Dann wird in Block 1013 eine dritte Phase implementiert, beispielsweise die Phase (III) 363, wie sie im Zusammenhang mit den FIGs. voranstehend beschrieben wurde. Dabei werden der erste Schalter und der zweite Schalter im nicht-leitenden Zustand betrieben.

Dann wird Block 1011 wiederholt.

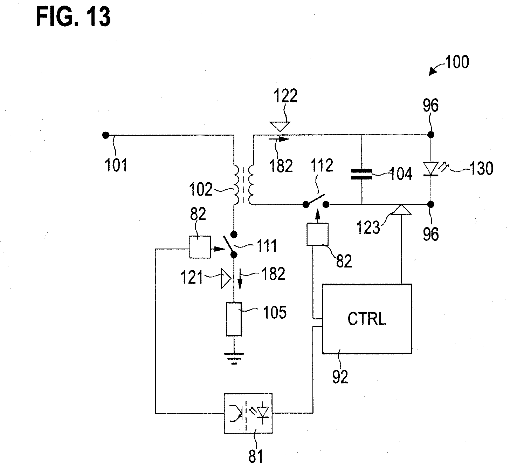

FIG. 13 illustriert schematisch einen Sperrwandler 100 gemäß verschiedener Beispiele. Im Beispiel der FIG. 13 ist die Steuerung mit der Stromessschaltung 123 verbunden. Die Stromessschaltung 123 ist dabei zwischen dem Ausgangsanschluss 96 und den Schaltern 111, 112 angeordnet. Eine solche Anordnung der Stromessschaltung 123 wäre auch für andere Arten von Schaltwandlern denkbar.

Bei der Implementierung des Schaltwandlers als Sperrwandler, wie in FIG. 13 dargestellt, ist die Strommessschaltung 123 insbesondere auf der sekundären Seite des Transformators 102 angeordnet.

Auch die Steuerung 92 ist auf der sekundären Seite des Transformators 102 angeordnet. Die Steuerung 92 ist - wie obenstehend in den verschiedenen Beispielen beschrieben - eingerichtet, um in Abhängigkeit von einem Messwert der Strommessschaltung 123 die Stellgröße einer Regelschleife 500 zum Schalten des Schalter 112 und des Schalters 111 zu bestimmen. Der Messwert der Strommessschaltung 123 kann also als Messsignal 506 der Regelschleife 500 berücksichtigt werden (cf. FIG. 4).

Dabei ist es im Allgemeinen möglich, unterschiedliche Varianten der Regelschleife zu implementieren. Zum Beispiel wäre es möglich, dass die Stellgröße 502 den Maximalwert 402 des primärseitigen Stromflusses 181 umfasst. Es wäre alternativ oder zusätzlich möglich, dass die Stellgröße den Maximalwert 351 des sekundärseitigen Stromflusses 182 umfasst. In anderen Beispielen könnte auch eine Stellgröße 502 im Zeitraum berücksichtigt werden, z.B. die Zeitdauer 372 (cf. FIGs. 5 - 7).

Selbst wenn der Schalter 111 nicht als Stellgröße 502 der Regelschleife 500 geschaltet wird, so könnte im Allgemeinen der Schalter 111 dennoch - etwa in Abhängigkeit von der Führungsgröße 509 oder abgeleitet aus der Stellgröße 502 durch die Steuerung 92 geschaltet werden. Um das entsprechende Steuersignal von der Sekundärseite zur Primärseite zu übertragen, ist ein Optokoppler 81 vorgesehen. In FIG. 13 wird das Steuersignal an eine - im Allgemeinen optionale - Gate-Treibereinheit 82 des Schalters 111 übergeben. Es wird auch eine Gate-Treibereinheit 82 des Schalters 112 angesteuert.

Durch das Verwenden des Messsignals 506 der Regelschleife 500, das einem Messwert der ausgangsseitig angeordneten Messschaltung 123 entspricht, kann eine besonders genaue Regelung erfolgen. Insbesondere kann eine Führungsgröße 509, die dem mittleren Stromfluss zur Leuchtdiode 130 entspricht, besonders genau umgesetzt werden. Es müssen z.B. keine Modellannahmen, die das Verhalten von elektrischen Bauteilen des Schaltwandlers 100 betreffen, getroffen werden, um auf den mittleren Stromfluss 345 zur Leuchtdiode 130 zurück zu schließen.

Außerdem kann durch das Vorsehen der Steuerung 92 auf der Sekundärseite des Transformators 102 im Falle eines Sperrwandlers 100 eine Versorgungsspannung verwendet werden, die SELV-Anforderungen (engl. Safety Extra-Low Voltage) entspricht.

Die Implementierung mittels Optokopplers 81 im Falle eines Sperrwandlers 100 ist außerdem vergleichsweise kostengünstig.

Zusammenfassend wurden voranstehend Techniken beschrieben, die es ermöglichen, den mittleren Stromfluss durch einen Schaltwandler zu einer Last besonders genau einzustellen. Mittels der hierin beschriebenen Techniken ist es außerdem möglich, über einen großen Einstellungsbereich des mittleren Stromflusses zur Last die Schaltfrequenz, mit welcher die Schalter des Schaltwandlers betrieben werden, in Bezug auf Flackern einerseits und Verlustleistung andererseits, optimiert zu dimensionieren. Mittels der hierin beschriebenen Techniken kann es möglich sein, die Schaltfrequenz über einen großen Einstellungsbereich bei einem gewünschten Wert zu stabilisieren.

Selbstverständlich können die Merkmale der vorab beschriebenen Ausführungsformen und Aspekte der Erfindung miteinander kombiniert werden. Insbesondere können die Merkmale nicht nur in den beschriebenen Kombinationen, sondern auch in anderen Kombinationen oder für sich genommen verwendet werden, ohne das Gebiet der Erfindung zu verlassen.

Anstatt einer Leuchtdiode können auch andere elektrische Verbraucher als Last versorgt werden.

**Patentansprüche**

1. Betriebsgerät (90) für eine elektrische Last (130), das umfasst:

   • einen DC-DC-Sperrwandler (100) aufweisend einen Transformator (102), einen auf einer primären Seite des Transformators (102) angeordneten ersten Schalter (111), und einen auf einer sekundären Seite des Transformators (102) angeordneten zweiten Schalter (112), und
   • eine Steuerung (92), die eingerichtet ist, um den zweiten Schalter (112) basierend auf einer Stellgröße (502) einer Regelschleife (500) zu schalten,

      ◦ wobei die Stellgröße (502) eine Zeitdauer (372), während welcher der zweite Schalter (112) im leitenden Zustand (381) betrieben wird, umfasst, und
      ◦ wobei der DC-DC Sperrwandler (100) eine Regelstrecke (503) der Regelschleife (500) und die Steuerung (92) ein Regler (501) der Regelschleife (500) sind,

- wobei die Steuerung (92) eingerichtet ist:

o den ersten Schalter (111) vom leitenden Zustand in den nichtleitenden Zustand zu schalten, wenn ein Stromfluss (181) durch den ersten Schalter (111) einen vorgegebenen Maximalwert (402) des primärseitigen Stromflusses erreicht, **dadurch gekennzeichnet, dass** der vorgegebene Maximalwert (402) des Stromflusses (181) durch den ersten Schalter (111) in Abhängigkeit von einer Tiefpassfilterung der Zeitdauer (372), während welcher der zweite Schalter (112) im leitenden Zustand betrieben wird, bestimmt ist.

2. Betriebsgerät (90) nach Anspruch 1, das weiterhin umfasst:

- eine Dither-Quelle, die eingerichtet ist, um ein Dither-Signal bereitzustellen, wobei das Dither-Signal eine Modulation (379) der Zeitdauer, für die der zweite Schalter im leitenden Zustand (381) betrieben wird, als Stellgröße (502) bewirkt.

3. Betriebsgerät (90) nach Anspruch 1 oder 2, das weiterhin umfasst:

- einen Zeitgeber, der eingerichtet ist, um ein Zeitgebersignal bereitzustellen, das indikativ für die Zeitdauer (372), für die der zweite Schalter im leitenden Zustand (381) betrieben wird, ist, und
- einen Schalter-Treiber, der eingerichtet ist, um den zweiten Schalter (112) zwischen dem leitenden Zustand (381) und einem nicht-leitenden Zustand (382) basierend auf dem Zeitgebersignal zu schalten.

4. Betriebsgerät (90) nach Anspruch 2 und 3,

- wobei der Zeitgeber eingerichtet ist, um das Zeitgebersignal basierend auf einem Taktsignal (377) von einer Taktquelle bereitzustellen,
- wobei die Modulation der Zeitdauer, für die der zweite Schalter im leitenden Zustand (381) betrieben wird, durch das Dithersignal im Bereich von 20 % - 200 % einer Taktperiode (378) des Taktsignals (377) liegt.

5. Betriebsgerät (90) nach einem der voranstehenden Ansprüche,

- wobei die Stellgröße (502) nicht die Zeitdauer (371), während welcher der erste Schalter (111) im leitenden Zustand (381) ist, umfasst. •

6. Betriebsgerät (90) nach einem der voranstehenden Ansprüche,

- wobei eine Führungsgröße (509) der Regelschleife (500) in Abhängigkeit von einem vorgegeben mittleren Stromfluss (345) durch den DC-DC-Sperrwandler (100) zur elektrischen Last (130) und/oder in Abhängigkeit von der Zeitdauer (371), während welcher der erste Schalter (111) im leitenden Zustand (381) betrieben wird, bestimmt ist.

7. Betriebsgerät (90) nach Anspruch 6,

- wobei die Steuerung (92) weiterhin eingerichtet ist, eine Änderungsrate der Führungsgröße (509) und/oder eine Änderungsrate der Zeitdauer (371), während welcher der erste Schalter (111) im leitenden Zustand (381) betrieben wird, basierend auf einer Zeitkonstante der Regelschleife (500) zu begrenzen.

8. Betriebsgerät (90) nach einem der voranstehenden Ansprüche, das weiterhin umfasst:

- eine Messschaltung (122), die eingerichtet ist, um einen Stromfluss (182) durch den zweiten Schalter (112) zu messen,

wobei die Steuerung (92) eingerichtet ist, um das Schalten des zweiten Schalters (112) als Stellgröße (502) der Regelschleife (500) in Abhängigkeit von einem Schwellenwertvergleich zwischen dem Stromfluss (182) durch den zweiten Schalter (112) und einem vorgegebenen Schwellenwert (351A, 352A) selektiv zu übergehen.

9. Verfahren zum Betreiben eines Betriebsgeräts gemäß einem der vorhergehenden Ansprüche, aufweisend die Verfahrensschritte:

• Schalten, mittels der Steuerung (92), des zweiten Schalters (112) basierend auf der Stellgröße (502) der Regelschleife (500), wobei die Stellgröße (502) die Zeitdauer (372), während welcher der zweite Schalter (112) in dem leitenden Zustand (381) betrieben wird, umfasst;
• Schalten, mittels der Steuerung (92), des ersten Schalters (111), wenn der Stromfluss (181) durch den ersten Schalter (111) den vorgegebenen Maximalwert (402) erreicht, **dadurch gekennzeichnet, dass** der vorgegebene Maximalwert (402) des Stromflusses (181) durch den ersten Schalter (111) in Abhängigkeit von der Tiefpassfilterung der Zeitdauer (372), während welcher der zweite Schalter (112) im leitenden Zustand betrieben wird, bestimmt ist.

**Claims**

1.  Control gear (90) for an electrical load (130), comprising:

    • a DC-DC flyback converter (100) having a transformer (102), a first switch (111) arranged on a primary side of the transformer (102) and a second switch (112) arranged on a secondary side of the transformer (102), and
    • a control device (92) which is configured to switch the second switch (112) on the basis of a manipulated variable (502) of a control loop (500),

        ○ the manipulated variable (502) comprising a time duration (372) during which the second switch (112) is operated in the conductive state (381) and
        ○ the DC-DC flyback converter (100) being a closed-loop control system (503) of the control loop (500), and the control device (92) being a closed-loop controller (501) of the control loop (500),

    • the control device (92) being configured to:

        ○ switch the first switch (111) from the conductive state to the non-conductive state when a current flow (181) through the first switch (111) reaches a predetermined maximum value (402) of the primary-side current flow, **characterized in that** the predetermined maximum value (402) of the current flow (181) is determined by the first switch (111) as function of a low-pass filtering of the time duration (372) during which the second switch (112) is operated in the conductive state.

2.  Control gear (90) according to claim 1, furthermore comprising:

    • a dither source, which is configured to provide a dither signal, wherein the dither signal causes a modulation (379) of the time duration as the manipulated variable (502), for which modulation the second switch is operated in the conductive state (381).

3.  Control gear (90) according to either claim 1 or claim 2, furthermore comprising:

    • a timer which is configured to provide a timer signal which is indicative of the time duration (372) for which the second switch is operated in the conductive state (381), and
    • a switch driver which is configured to switch the second switch (112) between the conductive state (381) and a non-conductive state (382) on the basis of the timer signal.

4.  Control gear (90) according to claim 2 and claim 3,

    • wherein the timer is configured to provide the timer signal on the basis of a clock signal (377) from a clock source,
    • wherein the modulation, by the dither signal, of the time duration for which the second switch is operated in the conductive state (381) lies in the range from 20% to 200% of a clock period (378) of the clock signal (377).

5.  Control gear (90) according to any of the preceding claims,

    • wherein the manipulated variable (502) does not comprise the time duration (371) during which the first switch (111) is in the conductive state (381). •

**6.** Control gear (90) according to any of the preceding claims,

• wherein a reference variable (509) of the control loop (500) is determined as a function of a predetermined average current flow (345) through the DC-DC flyback converter (100) to the electrical load (130) and/or as a function of the time duration (371) during which the first switch (111) is operated in the conductive state (381).

**7.** Control gear (90) according to claim 6,

• wherein the control device (92) is further configured to limit a rate of change of the reference variable (509) and/or a rate of change of the time duration (371) during which the first switch (111) is operated in the conductive state (381), on the basis of a time constant of the control loop (500).

**8.** Control gear (90) according to any of the preceding claims, further comprising:

• a measuring circuit (122) which is configured to measure a current flow (182) through the second switch (112),

wherein the control device (92) is configured to selectively skip switching of the second switch (112) as the manipulated variable (502) of the control loop (500) as a function of a threshold value comparison between the current flow (182) through the second switch (112) and a predetermined threshold value (351A, 352A).

**9.** Method for operating a control gear according to any of the preceding claims, comprising the following method steps:

• switching, by means of the control device (92), the second switch (112) on the basis of the manipulated variable (502) of the control loop (500), the manipulated variable (502) comprising the time duration (372) during which the second switch (112) is operated in the conductive state (381);
• switching, by means of the control device (92), the first switch (111) when the current flow (181) through the first switch (111) reaches the predetermined maximum value (402), **characterized in that**

the predetermined maximum value (402) of the current flow (181) through the first switch (111) is determined as a function of the low-pass filtering of the time duration (372) during which the second switch (112) is operated in the conductive state.

**Revendications**

**1.** Appareil de fonctionnement (90) pour une charge électrique (130), lequel comprend :

• un convertisseur à transfert indirect CC-CC (100) présentant un transformateur (102), un premier commutateur (111) disposé sur un côté primaire du transformateur (102), et un second commutateur (112) disposé sur un côté secondaire du transformateur (102), et
• un dispositif de commande (92), lequel est configuré pour commuter le second commutateur (112) sur la base d'une grandeur de réglage (502) d'une boucle de régulation (500),

o la grandeur de réglage (502) comprenant une durée (372) pendant laquelle le second commutateur (112) fonctionne à l'état conducteur (381), et
o le convertisseur à transfert indirect CC-CC (100) étant un système régulé (503) de la boucle de régulation (500) et le dispositif de commande (92) étant un régulateur (501) de la boucle de régulation (500),

• le dispositif de commande (92) étant configuré pour :

o commuter le premier commutateur (111) de l'état conducteur à l'état non conducteur lorsqu'un flux de courant (181) à travers le premier commutateur (111) atteint une valeur maximale (402) prédéfinie du flux de courant côté primaire, **caractérisé en ce que** la valeur maximale (402) prédéfinie du flux de courant (181) est déterminée par le premier commutateur (111) en fonction d'un filtrage passe-bas de la durée (372) pendant laquelle le second commutateur (112) fonctionne à l'état conducteur.

**2.** Appareil de fonctionnement (90) selon la revendication 1, lequel comprend en outre :

• une source de vibrations, laquelle est configurée pour fournir un signal de vibration, le signal de vibration provoquant une modulation (379) de la durée, durant laquelle le second commutateur fonctionne à l'état conducteur (381), en tant que grandeur de réglage (502).

3. Appareil de fonctionnement (90) selon la revendication 1 ou 2, lequel comprend en outre :

• un temporisateur, lequel est configuré pour fournir un signal de temporisateur qui indique la durée (372) durant laquelle le second commutateur fonctionne à l'état conducteur (381), et
• une attaque de commutateur, laquelle est configurée pour commuter le second commutateur (112) entre l'état conducteur (381) et un état non conducteur (382) sur la base du signal de temporisateur.

4. Appareil de fonctionnement (90) selon les revendications 2 et 3,

• le temporisateur étant configuré pour fournir le signal de temporisateur sur la base d'un signal d'horloge (377) provenant d'une source d'horloge,
• la modulation de la durée, durant laquelle le second commutateur fonctionne à l'état conducteur (381), par le signal de vibration se situant dans la plage de 20 % à 200 % d'une période d'horloge (378) du signal d'horloge (377).

5. Appareil de fonctionnement (90) selon l'une des revendications précédentes,

• la grandeur de réglage (502) ne comprenant pas la durée (371) pendant laquelle le premier commutateur (111) se trouve dans l'état conducteur (381). •

6. Appareil de fonctionnement (90) selon l'une des revendications précédentes,

• une grandeur de guidage (509) de la boucle de régulation (500) étant déterminée en fonction d'un flux de courant moyen (345) prédéfini à travers le convertisseur à transfert indirect CC-CC (100) vers la charge électrique (130) et/ou en fonction de la durée (371) pendant laquelle le premier commutateur (111) fonctionne à l'état conducteur (381).

7. Appareil de fonctionnement (90) selon la revendication 6,

• le dispositif de commande (92) étant en outre configuré pour limiter un taux de modification de la grandeur de guidage (509) et/ou un taux de modification de la durée (371) pendant laquelle le premier commutateur (111) fonctionne à l'état conducteur (381), sur la base d'une constante temporelle de la boucle de régulation (500).

8. Appareil de fonctionnement (90) selon l'une des revendications précédentes, lequel comprend en outre :

• un circuit de mesure (122), lequel est configuré pour mesurer un flux de courant (182) à travers le second commutateur (112),

le dispositif de commande (92) étant configuré pour omettre sélectivement la commutation du second commutateur (112) en tant que grandeur de réglage (502) de la boucle de régulation (500) en fonction d'une comparaison de valeurs seuils entre le flux de courant (182) à travers le second commutateur (112) et une valeur seuil prédéfinie (351A, 352A).

9. Procédé permettant de faire fonctionner un appareil de fonctionnement selon l'une des revendications précédentes, présentant les étapes de procédé de :

• commutation, au moyen du dispositif de commande (92), du second commutateur (112) sur la base de la grandeur de réglage (502) de la boucle de régulation (500), la grandeur de réglage (502) comprenant la durée (372) pendant laquelle le second commutateur (112) fonctionne à l'état conducteur (381) ;
• commutation, au moyen du dispositif de commande (92), du premier commutateur (111) lorsque le flux de courant (181) à travers le premier commutateur (111) atteint la valeur maximale (402) prédéfinie, **caractérisé en ce que**

la valeur maximale (402) prédéfinie du flux de courant (181) à travers le premier commutateur (111) est déterminée en fonction du filtrage passe-bas de la durée (372) pendant laquelle le second commutateur (112) fonctionne à l'état conducteur.

FIG. 1

**FIG. 2**

**FIG. 3**

# FIG. 4

EP 3 662 724 B1

FIG. 5

22

# FIG. 6

## FIG. 7

**FIG. 8**

# FIG. 9

1001

Steuern des Schalters eines DC-DC-Sperrwandlers
als Stellgröße einer Regelschleife im Zeitraum

1002

Anpassen des Schaltens eines weiteren Schalters
des DC-DC-Sperrwandlers

**FIG. 10**

# FIG. 11

DCM          Hybrid

# FIG. 12

1011

in erster Phase:
Betreiben eines ersten Schalters im leitenden Zustand und
Betreiben eines zweiten Schalters im nicht-leitenden Zustand

1012

in zweiter Phase:
Betreiben eines ersten Schalters im nicht-leitenden Zustand und
Betreiben eines zweiten Schalters im leitenden Zustand

1013

in dritter Phase:
Betreiben eines ersten Schalters im nicht-leitenden Zustand und
Betreiben eines zweiten Schalters im nicht-leitenden Zustand

FIG. 13

**IN DER BESCHREIBUNG AUFGEFÜHRTE DOKUMENTE**

**In der Beschreibung aufgeführte Patentdokumente**

- DE 102015203249 A1
- DE 102015114036 A1